# EUROPEAN PATENT SPECIFICATION

(11) **EP 0 891 503 B1**
(45) Date of publication and mention of the grant of the patent: **24.07.2002**
(21) Application number: 97917330.9
(22) Date of filing: 09.04.1997
(51) Int. Cl.: F16G 11/10

(54) **CORD LOCKS**
SEILKLEMME
DISPOSITIFS DE BLOCAGE DE CORDONS

(30) Priority: 09.04.1996 GB 9607279
(43) Date of publication of application: 20.01.1999
(73) Proprietor: Aronsson, Gary, Liverpool L32 4UQ (GB)
(72) Inventor: Aronsson, Gary, Liverpool L32 4UQ (GB)
(74) Representative: Hughes, Brian Patrick
(86) International application number: GB9701008
(87) International publication number: WO9738243

(56) References cited:
- EP-A- 0 570 814
- US-A- 3 604 069
- US-A- 4 506 417
- US-A- 4 763 388
- PATENT ABSTRACTS OF JAPAN vol. 095, no. 010, 30 November 1995 & JP 07 177911 A (YKK KK), 18 July 1995,

## Description

The present invention relates to cord locks, and in particular, but not exclusively to cord locks for adjustably fastening a cord threaded through a seam of an anorak, tent or rucksack.

Conventionally, a cord is threaded through a peripheral seam on a hood of a jacket with each end of the cord protruding from a respective end opening of the seam. Each protruding end of the cord carries a respective cord lock. The hood is fastened about the face of the user by shortening the length of cord extending between the two cord locks thereby puckering the seam and reducing the size of the aperture of the hood. The length of the cord is adjusted by the two separate cord locks which are also known as toggles such that in the unlocked position of the cord lock, relative movement between the cord and cord lock is possible, and the lock can be moved along the length of the cord. In the locked position of the cord lock, relative movement between the cord and cord lock is not possible and the cord lock which is wider than the end opening of the seam, prevents the cord slipping through the seam.

If the user wishes to fasten the hood, it is necessary to tie together each protruding end of the cord. This has the disadvantage that the ends of the cord can become knotted, making it difficult for the user to untie the ends of the cord and remove the hood. Furthermore, the act of tying the ends of the cord can be cumbersome.

It has been proposed to overcome the above described drawback by providing a single cord lock through which both ends of the cord permanently extend. Thereby, both ends of the cord are permanently fastened together by the single cord lock and the length of the cord is adjusted by unlocking the single cord lock and moving the lock along the cord to a new position whereat it is once again locked to prevent further relative movement. However, this particular type of cord lock has the disadvantage that because the ends of the cord are permanently attached to the cord lock, it is not possible to separate the ends of the cord. Therefore, the user can only remove or put on the jacket by passing his head through the cord loop formed by the lock. This necessitates a somewhat long length of cord to enable the loop to be enlarged sufficiently to enable the head of the user to easily pass therethrough. Thereby, each end of the cord extending from the seam is extremely long and the cord lock in the unfastened position is situated in the region of the waist of the user and can swing about causing possible injury. Also, the cord and/or lock can become entangled in, for example, a bicycle wheel, thereby causing the user to fall from the bicycle. US 4,506,417, on which the preamble of claim 1 is based, discloses a cord lock of this general character.

It is an object of the present invention to provide a cord lock which overcomes or alleviates the problems associated with the known cord locks.

In accordance with one aspect of the present invention, there is provided a cord lock, which in use releasably fastens together first and second ends of a cord of substantially uniform diameter, comprising a plug slidably disposed within a socket and movable along a longitudinal axis of the socket a resilient means acting between the plug and socket such that in a rest position the plug and socket are held in a position in which respective peripheral openings in the plug and socket are held out of alignment thereby retaining a first end of the cord in an opening but which when acted upon by pressing an end of the plug causes the peripheral openings to be aligned such that the cord can be released, characterised in that an opening is provided in an end of the socket remote from the plug end which is pressed to cause the peripheral opening to be aligned such that the second end of the cord exits the socket substantially along the longitudinal axis of the socket.

This has the advantage that both ends of the cord can be fastened together by a single cord lock without knotting· Removal of the cord from the lock allows the two ends of the cord to be separated, thereby allowing easier removal of a jacket. The length of the cord can be adjusted by altering the portion of the cord which is held by the lock.

Preferably, the second end of the cord is housed within the socket.

Preferably, the second end of the cord is tied off, knotted, within a void within which the resilient means is housed.

Preferably, the second end of the cord is not readily releasable from the cord lock.

Preferably, the second end of the cord is directly attached to the cord lock.

Preferably, the second end of the cord is attached to the cord lock by means of a knot.

Preferably, the second end of the cord is indirectly attached to the cord lock.

Preferably, the socket has a triangular cross section and the opening is provided at an apex of the triangular shape.

Preferably, the resilient means is a compression spring.

By way of example only, an embodiment of the present invention will now be described, with reference to the accompanying drawings, in which:-
Fig. 1 is a perspective view of a first form of cord lock useful for understanding the present invention;
Fig. 2 is a perspective view of the cord lock of Fig. 1 illustrating the cord lock in the unlocked position;
Fig. 3 is a perspective view of a second form of cord lock, useful in understanding the present invention, illustrating the cord lock in the unlocked position; and
Fig. 4 is a perspective view of a cord lock, constructed in accordance with the present invention, illustrating the cord lock in the unlocked position.

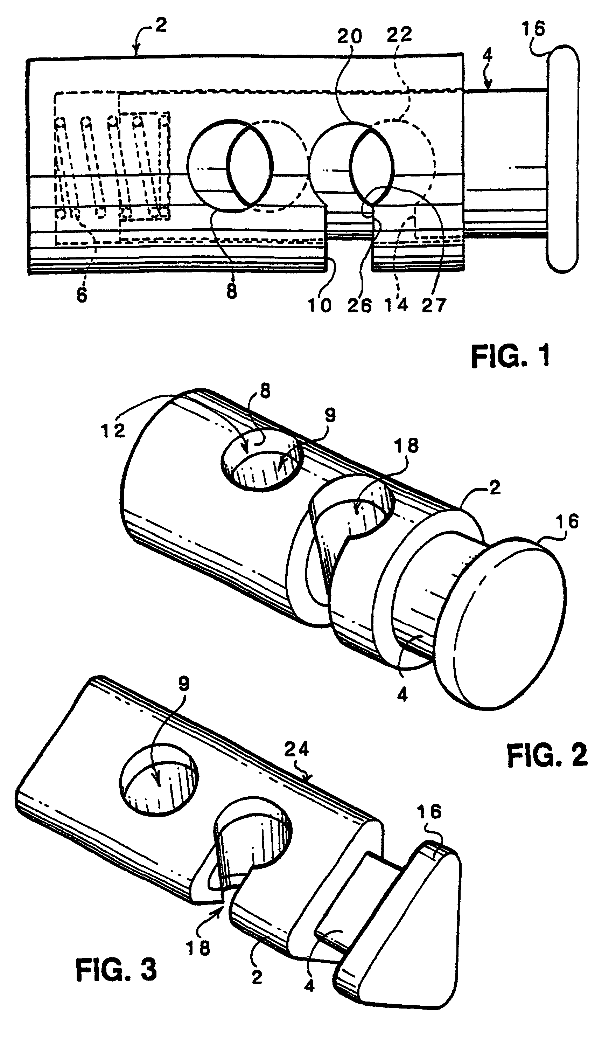

The cord locks shown in Figs. 1 to 4, comprises a socket 2, a plug 4 movably fitted in the socket 2, and a compression spring 6 which is located within the socket 2 and acts between the socket 2 and plug 4.

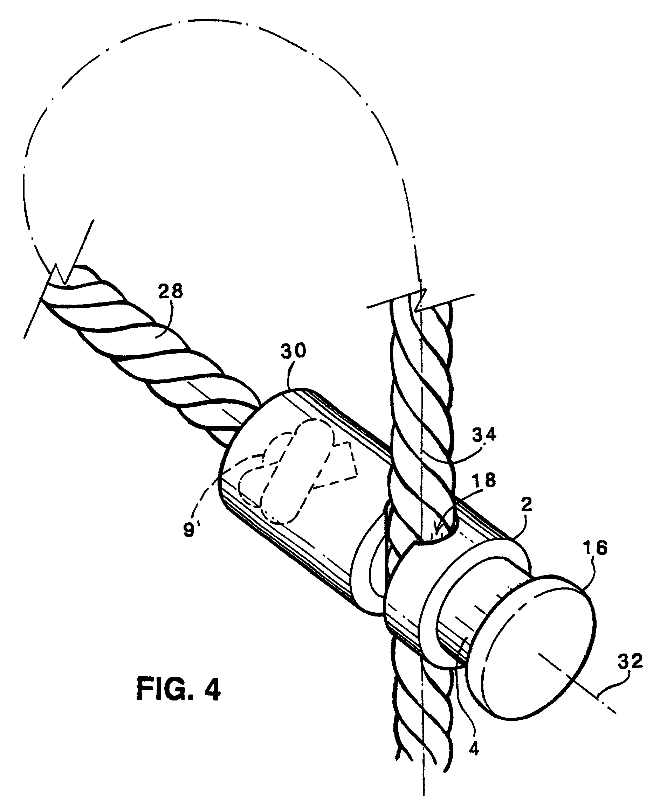

In Figs. 1 to 3 the socket 2 has diametrically opposed apertures 8 (only one of which is visible in the Figures) which form a passage 9 through the socket 2, and a peripheral opening 10 and the plug 4 has a through-bore 12 and a peripheral opening 14. In Fig.4, passage 9 and throughbore 12 are replaced by a simpler arrangement which enables the cord to be fixedly attached to the cord lock. In the locked or rest position, as best illustrated in Fig. 1, the longitudinal axis of the bore 12 is axially offset with respect to that of the passage 9, and the opening 14 is axially offset with respect to the opening 10. An edge 26 of the plug 4 and an edge 27 of the socket 2 causes the opening 18 to be closed at its periphery.

A cord is threaded through the cord lock by displacing the plug 4 against the resiliency of the spring 6, into the socket 2. This is achieved by depressing the plug's protruding end 16. This results in the co-axial alignment of the bore 12 of the plug 4 with the passage 9 of the socket 2. One end of a cord (not illustrated) may then be threaded through the plug and socket combination through a passageway, created by the aligned passage 8 and bore 12. The cord is locked in place by removing the displacement force applied to the end 16 of the plug 4 which results in the spring 6 returning the plug 4 to the rest position. This results in the cord being trapped between the plug 4 and socket 2 and their now misaglined bore 12 and passage 8.

In use, the length of the cord can be adjusted by simply displacing the plug 4 down into the socket 2 in order to align the bore 12 and passage 8 and thereby allowing the cord to move freely through the resultant passageway. The cord is locked in position simply by releasing the plug 4.

In order to fasten the two ends of the cord together, the end 16 of the plug 4 is depressed as hereinabove described which results in the alignment of the opening 10 of the socket 2 and opening 14 of the plug 4. A length of cord at the free end of the cord, remote from the lock, is then placed in the resultant opening 18. By releasing the plug 4, the plug 4 is returned to its rest position by the spring 6 with a consequential misalignment of the openings 10, 14, whereby the cord is trapped between the socket 2 and plug 4. The two ends of the cord are thereby fastened together by the cord lock and can be simply unfastened by re-alignment of the openings 10, 14 by depressing the plug and removal of the cord from therein.

The openings 10, 14 are each rectangular shaped notches in the surface of the respective socket and plug, whose interior 20, 22 opens out and is substantially rounded.

The cord locks of Figs. 1 and 2 illustrate a tubular socket and plug, although is should be appreciated that the invention is not restricted to the shape of a conventional toggle, for instance, the cord lock of Fig. 3 illustrates a variant on the shape of the plug and socket where the overall design is triangular.

In Fig. 3, the opening 18 is located in the region of an apex of the triangular shape of the lock. The region 24 adjacent the opening 18 thereby has an increased magnitude, in comparison to the lock of a tubular design. The increased size of the region 24 improves the overall strength of the lock in the region 24 and reduces stress in the region 24 when the end 16 of the plug 4 is depressed. In the embodiment of the present invention shown in Fig. 4, (compare to Fig. 2) one end of a cord 28 passes through a passage 9' in an end 30 of the socket 2 remote from the end 16 of plug 4. The end of the cord 28 can be tied off, knotted, within a void (not shown) in which the resilient means, for example, a compression spring is housed. The other end of the cord passes through locking means 4 in the same manner as described with reference to Fig. 2. This arrangement is particularly effective when the cord is tightened, by pulling it along the longitudinal axes 32 of the cord lock body as opposed to the longitudinal axis 34 of opening 18. Such a cord lock is ideal as a toggle in the waist of, for example, an anorak. In an alternative embodiment, not illustrated, the overall design of the lock is rectangular and the opening 18 is provided in one surface or a corner region of the rectangular shape. This design also provides a region of increased magnitude adjacent the opening 18.

## Claims

1. A cord lock, which in use releasably fastens together first and second ends of a cord (28) of substantially uniform diameter, comprising:
a plug (4) slidably disposed within a socket (2) and movable along a longitudinal axis (32) of the socket;
a resilient means (6) acting between the plug and socket such that in a rest position the plug and socket are held in a position in which respective peripheral openings (22, 14; 20, 10) in the plug and socket are held out of alignment thereby retaining a first end of the cord (28) in an opening (18) but which when acted upon, by pressing an end (16) of the plug, causes the peripheral openings to be aligned such that the cord can be released;
**characterised in that** an opening (9') is provided in an end (30) of the socket remote from the plug end (16) which is pressed to cause the peripheral opening to be aligned such that the second end of the cord (28) exits the socket substantially along the longitudinal axis (32) of the socket.

2. A cord lock as claimed in claim 1, wherein the second end of the cord is housed within the socket.

3. A cord lock as claimed in claim 1 or claim 2, wherein the second end of the cord (28) is tied off, knotted, within a void within which the resilient means is housed.

4. A cord lock as claimed in any of the preceding claims, wherein the second end of the cord is not readily releasable from the cord lock.

5. A cord lock as claimed in any of the preceding claims, wherein the second end of the cord is directly attached to the cord lock.

6. A cord lock as claimed in claim 5, wherein the second end of the cord is attached to the cord lock by means of a knot.

7. A cord lock as claimed in any of claims 1 to 4, wherein the second end of the cord is indirectly attached to the cord lock.

8. A cord lock as claimed in any of the preceding claims, wherein the socket (2) has a triangular cross section and the opening (18) is provided at an apex of the triangular shape.

9. A cord lock as claimed in any of the preceding claims, wherein the resilient means is a compression spring.

## Patentansprüche

1. Kordelverschluss, der ein erstes und zweites Ende einer Kordel (28) mit weitaus gleichmässigem Durchmesser lösbar aneinander befestigt, einschliesslich:
einem Stöpsel (4), der verschiebbar in einer Hülse (2) angeordnet und längs einer Längsachse (32) der Hülse bewegbar ist;
ein Federelement (6), dass so zwischen dem Stöpsel und der Hülse wirkt, dass der Stöpsel und die Hülse in einer Ruheposition in einer Position gehalten werden, in der die jeweiligen peripheren Öffnungen (22, 14; 20, 10) im Stöpsel und in der Hülse nicht fluchten und somit ein erstes Ende der Kordel (28) in einer Öffnung (18) halten, wobei jedoch nach einer Aktivierung durch Eindrücken eines Endes (16) des Stöpsels, die peripheren Öffnungen fluchten, so dass sich die Kordel frei bewegen kann;
**dadurch gekennzeichnet, dass** eine Öffnung (9') in einem vom Stöpselende (16) distalen Ende (30) angeordnet ist, das eingedrückt wird, um die periphere Öffnung so auszurichten, dass das zweite Ende der Kordel (28) weitgehend längs der Längsachse(32) der Hülse aus der Hülse austritt.

2. Kordelverschluss gemäss Anspruch 1, wobei das zweite Ende der Kordel in der Hülse angeordnet ist.

3. Kordelverschluss gemäss Anspruch 1 oder 2, wobei das zweite Ende der Kordel (28) in einem Hohlraum zusammengebunden, verknotet ist, in dem das Federelement untergebracht ist.

4. Kordelverschluss gemäss jedem der vorstehenden Ansprüche, wobei das zweite Ende der Kordel nicht einfach vom Kordelverschluss lösbar ist.

5. Kordelverschluss gemäss jedem der vorstehenden Ansprüche, wobei das zweite Ende der Kordel direkt am Kordelverschluss befestigt ist.

6. Kordelverschluss gemäss jedem der vorstehenden Ansprüche, wobei das zweite Ende der Kordel direkt mit einem Knoten am Kordelverschluss befestigt ist.

7. Kordelverschluss gemäss jedem der Ansprüche 1 bis 4, wobei das zweite Ende der Kordel indirekt am Kordelverschluss befestigt ist.

8. Kordelverschluss gemäss jedem der vorstehenden Ansprüche, wobei die Hülse (2) einen dreieckigen Querschnitt aufweist und die Öffnung (18) am obersten Punkt der Dreiecksform angeordnet ist.

9. Kordelverschluss gemäss jedem der vorstehenden Ansprüche, wobei das Federelement eine Druckfeder ist.

## Revendications

1. Un dispositif de blocage de cordon, qui sert à attacher ensemble, de façon déblocable, des première et deuxième extrémités d'un cordon (28) d'un diamètre substantiellement uniforme, comprenant:
une pièce (4) disposée, de façon à pouvoir glisser, à l'intérieur d'une douille (2) et pouvant se déplacer le long d'un axe longitudinal (32) de la douille;
un moyen élastique (6) agissant entre la pièce et la douille de sorte que, dans une position de repos, la pièce et la douille soient maintenues dans une position dans laquelle des orifices périphériques respectifs (22, 14; 20, 10) dans la pièce et la douille sont maintenus non-alignés, retenant ainsi une première extrémité du cordon (28) dans un orifice (18), mais qui, lorsqu'on agit dessus en appuyant sur une extrémité (16) de la pièce, provoque l'alignement des orifices périphériques de sorte que le cordon puisse être débloqué;
**caractérisé en ce qu'**un orifice (9') est prévu dans une extrémité (30) de la douille située loin de l'extrémité de la pièce (16) sur laquelle on appuie pour faire aligner l'orifice périphérique de sorte que la deuxième extrémité du cordon (28) sorte de la douille substantiellement le long de l'axe longitudinal (32) de la douille.

2. Un dispositif de blocage de cordon comme revendiqué dans la revendication 1, dans quoi la deuxième extrémité du cordon est logée dans la douille.

3. Un dispositif de blocage de cordon comme revendiqué dans la revendication 1 ou la revendication 2, dans quoi la deuxième extrémité du cordon (28) est liée, nouée, à l'intérieur d'un vide dans lequel est logé le moyen élastique.

4. Un dispositif de blocage de cordon comme revendiqué dans l'une quelconque des revendications précédentes, dans quoi la deuxième extrémité du cordon n'est pas facilement déblocable du dispositif de blocage de cordon.

5. Un dispositif de blocage de cordon comme revendiqué dans l'une quelconque des revendications précédentes, dans quoi la deuxième extrémité du cordon est directement attachée au dispositif de blocage du cordon.

6. Un dispositif de blocage de cordon comme revendiqué dans la revendication 5, dans quoi la deuxième extrémité du cordon est attachée au dispositif de blocage de cordon au moyen d'un noeud.

7. Un dispositif de blocage de cordon comme revendiqué dans l'une quelconque des revendications 1 à 4, dans quoi la deuxième extrémité du cordon est indirectement attachée au dispositif de blocage de cordon.

8. Un dispositif de blocage de cordon comme revendiqué dans l'une quelconque des revendications précédentes, dans quoi la douille (2) a une section triangulaire et l'orifice (18) est prévu à un sommet de la forme triangulaire.

9. Un dispositif de blocage de cordon comme revendiqué dans l'une quelconque des revendications précédentes, dans quoi le moyen élastique est un ressort de compression.
